# EUROPEAN PATENT APPLICATION

(11) **EP 4 817 873 A1**
(43) Date of publication of application: **07.10.2026**
(21) Application number: 24897719.1
(22) Date of filing: 02.12.2024
(51) Int. Cl.: B32B 27/28, B32B 7/02, B32B 27/30, B32B 27/40, B65D 65/40, C08L 29/04

(54) **MULTILAYER STRUCTURE**

(30) Priority: 30.11.2023 JP 2023203088
(71) Applicant: Kuraray Co., Ltd., Kurashiki-shi, Okayama 710-0801 (JP)
(72) Inventor: BALEMANS, Franciscus Johannes Anna, 9120 MELSELE (BE); NONAKA, Yasuhiro, Osaka-shi, Osaka 530-8611 (JP); OKAMOTO, Makoto, 9120 MELSELE (BE)
(74) Representative: Müller-Boré & Partner Patentanwälte PartG mbB
(86) International application number: PCT/JP2024/042591
(87) International publication number: WO 2025/116038

(57) **Abstract**

Provided is a multilayer structure having sufficient gas barrier properties and having superior interlayer adhesiveness. A multilayer structure comprising: a gas barrier layer (A) comprising a modified ethylene-vinyl alcohol copolymer and inorganic particles; and a polyurethane layer (B) comprising a thermoplastic polyurethane, wherein the modified ethylene-vinyl alcohol copolymer comprises a monomer unit (a), a monomer unit (b), and a monomer unit (c) which are represented by the following formula (a), formula (b), and formula (c), respectively.

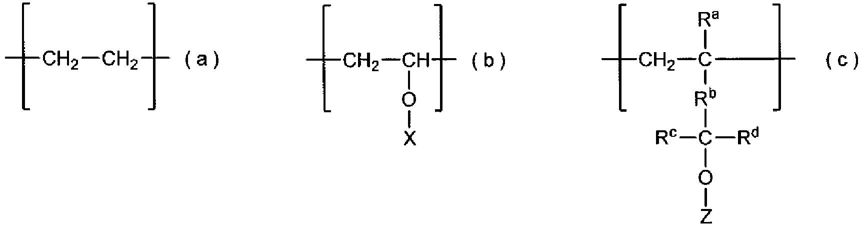

## Description

### [TECHNICAL FIELD]

The present invention relates to a multilayer structure.

### [DISCUSSION OF THE BACKGROUND]

Films obtained by using a resin, such as an ethylene-vinyl alcohol copolymer, having gas barrier properties find a wide range of applications such as packaging materials for food, medical treatment, and the like. Recently, for the purpose of improving various types of performance such as the gas barrier properties, a variety of multilayer structures have been proposed.

As a conventional multilayer structure in which layers of an ethylene-vinyl alcohol copolymer are laminated, Patent Document 1 discloses a multilayer structure including 8 or more layers in total of: a layer consisting of a resin composition containing a gas barrier resin such as an ethylene-vinyl alcohol copolymer or the like; and a layer consisting of a thermoplastic resin such as a thermoplastic polyurethane. Patent Document 1 teaches that due to a metal salt being contained in either one of adjacent layers, interlayer adhesiveness of the multilayer structure is improved.

### [PRIOR ART DOCUMENTS]

### [Patent Documents]

Patent Document 1: PCT International Publication No. 2011/068105

### [SUMMARY OF THE INVENTION]

### [Problems to be Solved by the Invention]

In recent years, there has been a demand for development of a multilayer structure having interlayer adhesiveness superior to that of conventional multilayer structures, and having sufficient performance that is almost equivalent to or even better than that of conventional multilayer structures, in terms of other properties such as gas barrier properties.

The present invention was made in view of the foregoing circumstances, and an object of the present invention to provide a multilayer structure having sufficient gas barrier properties and having superior interlayer adhesiveness.

### [Means for Solving the Problems]

The above-described objects are achieved by providing any one of the followings.
(1) A multilayer structure comprising: a gas barrier layer (A) comprising a modified ethylene-vinyl alcohol copolymer and inorganic particles; and a polyurethane layer (B) comprising a thermoplastic polyurethane, wherein the modified ethylene-vinyl alcohol copolymer comprises a monomer unit (a), a monomer unit (b), and a monomer unit (c) which are represented by the following formula (a), formula (b), and formula (c), respectively, percentage contents of the monomer unit (a), the monomer unit (b), and the monomer unit (c) in the modified ethylene-vinyl alcohol copolymer satisfy the following inequalities (1) to (3), respectively, as defined by the following equality (4), a degree of saponification (DS) in the modified ethylene-vinyl alcohol copolymer is 90 mol% or more, a content of the inorganic particles in the gas barrier layer (A), with respect to the modified ethylene-vinyl alcohol copolymer, is 5 ppm or more and 5,000 ppm or less, and at least a pair of the gas barrier layer (A) and the polyurethane layer (B) is directly laminated, 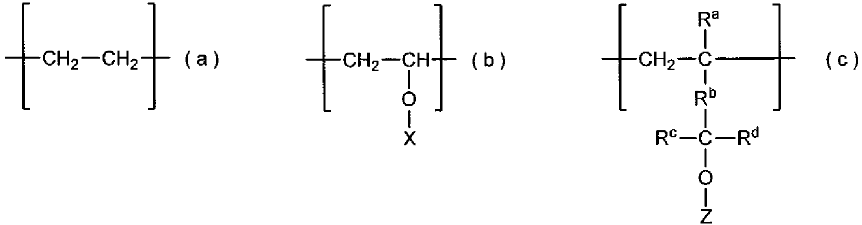
   wherein, in the formulae (a) to (c): R^{a} represents a hydrogen atom, a methyl group, or a group represented by R^{e}-O-Y; R^{d} and R^{e} each independently represent a single bond, an alkylene group having 1 to 9 carbon atoms, or an alkyleneoxy group having 1 to 9 carbon atoms, wherein a part or all of hydrogen atoms comprised in the alkylene group and the alkyleneoxy group may be substituted with a hydroxy group, an alkoxy group, or a halogen atom; R^{c} and R^{d} each independently represent a hydrogen atom or an alkyl group having 1 to 10 carbon atoms, wherein a part or all of hydrogen atoms comprised in the alkyl group may be substituted with a hydroxy group, an alkoxy group, or a halogen atom; and X, Y, and Z each independently represent a hydrogen atom, a formyl group, or an alkanoyl group having 2 to 10 carbon atoms, $18 \leq a \leq 55$ (1) $\left[100-\left(a+c\right)\right] \times 0.9 \leq b \leq \left[100-\left(a+c\right)\right]$ (2) $0.01 \leq c \leq 20$ (3)
   wherein, in the inequalities (1) to (3), a, b, and c represent percentage contents (mol%) of the monomer unit (a), the monomer unit (b), and the monomer unit (c), respectively, with respect to total monomer units of the modified ethylene-vinyl alcohol copolymer, $DS = \left[\left(\begin{matrix}total number of moles of X , Y , and Z which represent a hydrogen \\ atom\end{matrix}\right)/\left(total number of moles of X, Y, and Z\right)\right] \times 100$ (4);
(2) The multilayer structure according to (1), wherein the monomer unit (c) is represented by the following formula (c1): 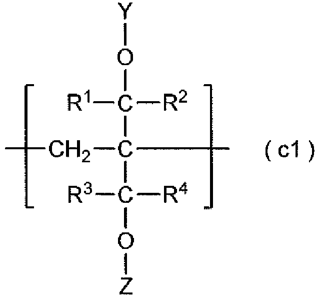 wherein, in the formula (c1): R¹, R², R³, and R⁴ each independently represent a hydrogen atom or an alkyl group having 1 to 10 carbon atoms, wherein a part or all of hydrogen atoms comprised in the alkyl group may be substituted with a hydroxy group, an alkoxy group, or a halogen atom; and Y and Z are as defined for Y and Z in the formula (c);
(3) The multilayer structure according to (2), wherein R¹, R², R³, and R⁴ each represent a hydrogen atom;
(4) The multilayer structure according to any one of (1) to (3), wherein X, Y and, Z each independently represent a hydrogen atom or an acetyl group; and
(5) The multilayer structure according to any one of (1) to (4), wherein an outermost layer is the polyurethane layer (B).

### [Effects of the Invention]

According to the present invention, a multilayer structure having sufficient gas barrier properties and having superior interlayer adhesiveness can be provided.

### [Description of Embodiments]

In the present description, numerical value ranges described using "to" mean that numerical values before and after "to" are included as the lower limit value and the upper limit value, respectively. More specifically, "α to β" means "α or more and β or less". Furthermore, in the present description, the upper limit value and the lower limit value of the numerical value range can be combined ad libitum.

The multilayer structure according to one embodiment of the present invention comprises: a gas barrier layer (A) (hereinafter, may be also referred to as "A layer") comprising a modified ethylene-vinyl alcohol copolymer (hereinafter, may be also referred to as "modified EVOH") and inorganic particles; and a polyurethane layer (B) (hereinafter, may be also referred to as "B layer") comprising a thermoplastic polyurethane (hereinafter, may be also referred to as "TPU"), wherein the modified EVOH comprises a monomer unit (a), a monomer unit (b), and a monomer unit (c) which are represented by the following formula (a), formula (b), and formula (c), respectively, percentage contents of the monomer unit (a), the monomer unit (b), and the monomer unit (c) in the modified EVOH satisfy the following inequalities (1) to (3), respectively, as defined by the following equality (4), a degree of saponification (DS) in the modified EVOH is 90 mol% or more, a content of the inorganic particles in the A layer, with respect to the modified EVOH, is 5 ppm or more and 5,000 ppm or less, and at least a pair of the A layer and the B layer is directly laminated, 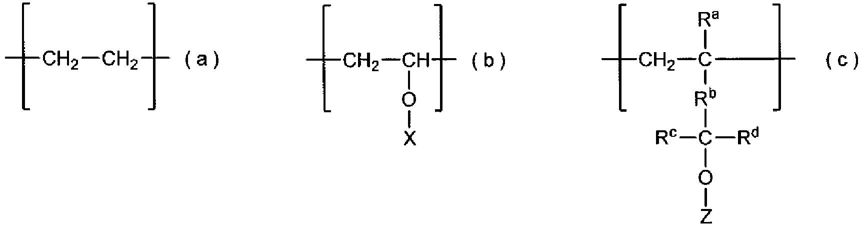
wherein, in the formulae (a) to (c): R^{a} represents a hydrogen atom, a methyl group, or a group represented by R^{e}-O-Y; R^{d} and R^{e} each independently represent a single bond, an alkylene group having 1 to 9 carbon atoms, or an alkyleneoxy group having 1 to 9 carbon atoms, wherein a part or all of hydrogen atoms comprised in the alkylene group and the alkyleneoxy group may be substituted with a hydroxy group, an alkoxy group, or a halogen atom; R^{c} and R^{d} each independently represent a hydrogen atom or an alkyl group having 1 to 10 carbon atoms, wherein a part or all of hydrogen atoms comprised in the alkyl group may be substituted with a hydroxy group, an alkoxy group, or a halogen atom; and X, Y, and Z each independently represent a hydrogen atom, a formyl group (-CHO), or an alkanoyl group having 2 to 10 carbon atoms, $18 \leq a \leq 55$ (1) $\left[100-\left(a+c\right)\right] \times 0.9 \leq b \leq \left[100-\left(a+c\right)\right]$ (2) $0.01 \leq c \leq 20$ (3)
wherein, in the inequalities (1) to (3), a, b, and c represent percentage contents (mol%) of the monomer unit (a), the monomer unit (b), and the monomer unit (c), respectively, with respect to total monomer units of the modified EVOH, $DS = \left[\left(\begin{matrix}total number of moles of X , Y , and Z which represent a hydrogen \\ atom\end{matrix}\right)/\left(total number of moles of X, Y, and Z\right)\right] \times 100$ (4)

The multilayer structure according to one embodiment of the present invention has sufficient gas barrier properties and has superior interlayer adhesiveness. Although the reasons for these advantages are not certain, the following reasons may be presumed. In a case in which at least one of Z and Y, which may be included in R^{a}, in the monomer unit (c) constituting the modified EVOH is a hydrogen atom, the monomer unit (c) has a hydroxy group at the terminal of the side chain. Such a hydroxy group is superior in reactivity to, for example, a hydroxy group direct bonded to the main chain, and the like. Therefore, the hydroxy group included in the monomer unit (c) that the modified EVOH in the A layer has is capable of effectively reacting with and bonding to an isocyanate group (-NCO) of TPU comprised in the B layer. In addition, the isocyanate group included in the TPU in the B layer is capable of favorably bonding also to the inorganic particles in the A layer. It is presumed that these bonds may improve the adhesiveness between the A layer and the B layer in the multilayer structure. Furthermore, due to the layer A comprising the modified EVOH as described above, and the like, the multilayer structure can exhibit sufficient gas barrier properties and also has favorable flex resistance, etc. Hereinafter, the configuration and the like of the multilayer structure according to one embodiment of the present invention will be described in detail.

### A layer

The A layer comprises a modified EVOH and inorganic particles. The A layer is a layer having gas barrier properties. An oxygen transmission rate of a single A layer, in terms of a valued measured under conditions involving 20 °C-85% RH, in accordance with a method described in JIS K7126-2 (equal pressure method; 2006) is preferably 50 cc·20 µm/ (m²·day·atm) or less, more preferably 10 cc·20 µm/ (m²·day·atm) or less, and still more preferably 5 cc·20 µm/ (m²·day·atm) or less. The oxygen transmission rate may be 0 cc·20 µm/ (m²·day·atm) or more, or may be 0.01 cc·20 µm/ (m²·day·atm) or more, or 0.1 cc·20 µm/ (m²·day·atm) or more.

### Modified EVOH

The modified EVOH comprises the monomer unit (a), the monomer unit (b), and the monomer unit (c) which are represented by the above formula (a), formula (b), and formula (c), respectively. The modified EVOH may be a random copolymer of these monomer units. One type, or two or more types of the modified EVOH can be used.

The monomer unit (a) is an ethylene unit. A percentage content of the monomer unit (a) in the modified EVOH satisfies the following inequality (1): $18 \leq a \leq 55$ (1) wherein, in the inequality (1), "a" represents a percentage content of (mol%) of the monomer unit (a) with respect to total monomer units of the modified EVOH.

When "a" in the inequality (1) (i.e., the percentage content of the monomer unit (a)) is equal to or more than the lower limit described above, flex resistance, flexibility, melt formability, gas barrier properties under high humidity, and the like can be improved. On the other hand, when "a" in the inequality (1) is equal to or less than the upper limit described above, the gas barrier properties, and the like can be improved. The lower limit of "a" is preferably 20, and more preferably 25, or may be 30 or 35. The upper limit of "a" is preferably 50, and more preferably 45, or may be 40.

The percentage content of each monomer unit of the modified EVOH herein is a value measured by the method described in EXAMPLES.

Regarding the monomer unit (b) and monomer unit (c), examples of the alkanoyl group having 2 to 10 carbon atoms which may be represented by X, Y, and Z in the formula (b) and formula (c) include acetyl groups (an ethanoyl group: CH₃-CO-), propionyl groups (a propanoyl group: CH₃CH₂-CO-), benzoyl groups (C₆H₅-CO-), acryl groups (a propenoyl group: CH₂=CH-CO-), and the like.

It is preferred that X, Y, and Z each independently represent a hydrogen atom or an acetyl group. In such a case, further improvements of the gas barrier properties and interlayer adhesiveness, and the like are enabled.

The monomer unit (b) is generally a unit derived from a vinyl ester. Examples of the vinyl ester include vinyl formate, vinyl acetate, vinyl propionate, vinyl butyrate, vinyl isobutyrate, vinyl pivalate, vinyl versatate, vinyl caprate, and the like, and vinyl acetate is preferred. Specifically, the monomer unit (b) may be a vinyl ester unit, or a vinyl alcohol unit generated by saponification of a vinyl ester unit.

The percentage content of the monomer unit (b) in the modified EVOH satisfies the following inequality (2): $\left[100-\left(a+c\right)\right] \times 0.9 \leq b \leq \left[100-\left(a+c\right)\right]$ (2) wherein, in the inequality (2), a, b, and c represent percentage contents (mol%) of the monomer unit (a), the monomer unit (b), and the monomer unit (c), respectively, with respect to total monomer units of the modified EVOH.

When b in the inequality (2) (i.e., a percentage content of the monomer unit (b)) falls within the above range, gas barrier properties, flex resistance, melt formability, and the like can be improved. The lower limit of b may be [100 - (a + c)] × 0.95, or may be [100 - (a + c)] × 0.99.

Regarding the monomer unit (c), R^{a} in the formula (c) is preferably the group represented by R^{e}-O-Y. R^{e} represents preferably an alkylene group having 1 to 9 carbon atoms, more preferably an alkylene group having 1 to 3 carbon atoms, and still more preferably an alkylene group having one carbon atom (i.e., a methylene group). Although a part or all of hydrogen atoms comprised in these alkylene groups may be substituted, itis preferably unsubstituted. In other words, R^{a} is particularly preferably a group represented by CH₂-O-Y. In the case in which R^{a} represents such a group, and Y represents a hydrogen atom, the monomer unit (c) has a primary hydroxy group at the terminal of the side chain. Due to the primary hydroxy group being particularly superior in reactivity, adhesiveness between the gas barrier layer (A) and the polyurethane layer (B) can be more enhanced in such a case.

R^{d} represents preferably a single bond.

Examples of the alkyl group having 1 to 10 carbon atoms which may be represented by R^{c} and R^{d} include a methyl group, an ethyl group, an n-propyl group, an isopropyl group, an n-butyl group, an isobutyl group, a tert-butyl group, a pentyl group, and the like. R^{c} and R^{d} each independently represent preferably a hydrogen atom or an unsubstituted alkyl group having 1 to 10 carbon atoms, more preferably a hydrogen atom or an unsubstituted alkyl group having 1 to 3 carbon atoms, and still more preferably a hydrogen atom. In a case in which R^{c} and R^{d} each represent a hydrogen atom, and Z represents a hydrogen atom, the monomer unit (c) has a primary hydroxy group at the terminal of the side chain. Due to the primary hydroxy group being particularly superior in reactivity, the adhesiveness between the gas barrier layer (A) and the polyurethane layer (B) can be more enhanced in such a case.

The monomer unit (c) is preferably a monomer unit represented by the following formula (c1): 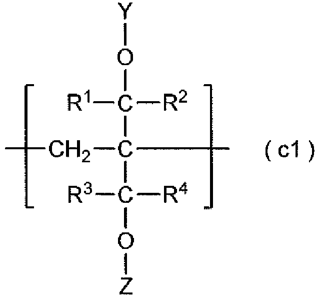 wherein, in the formula (c1), R¹, R², R³, and R⁴ each independently represent a hydrogen atom or an alkyl group having 1 to 10 carbon atoms, wherein a part or all of hydrogen atoms comprised in the alkyl group may be substituted with a hydroxy group, an alkoxy group, or a halogen atom; and Y and Z are as defined for Y and Z in the formula (c).

R¹, R², R³ and R⁴ each independently represent preferably a hydrogen atom or an unsubstituted alkyl group having 1 to 10 carbon atoms, more preferably a hydrogen atom or an unsubstituted alkyl group having 1 to 3 carbon atoms, and still more preferably a hydrogen atom. Also, it is preferred that both R¹ and R², or both R³ and R⁴ represent hydrogen atoms. In a case in which R¹ and R² each represent a hydrogen atom, and Y represents a hydrogen atom, or in a case in which R³ and R⁴ each represent a hydrogen atom, and Z represents a hydrogen atom, the monomer unit (c) has a primary hydroxy group at the terminal of the side chain. Due to the primary hydroxy group being particularly superior in reactivity, the adhesiveness between the gas barrier layer (A) and the polyurethane layer (B) can be more enhanced in such a case.

The monomer unit (c) represented by the above formula (c1) is typically a unit derived from a monomer unit represented by the following formula (5): 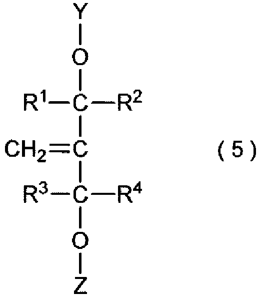 wherein, in the formula (5), R¹, R², R³, R⁴, Y, and Z are as defined for R¹, R², R³, R⁴, Y and Z in the formula (c1).

Examples of the monomer represented by the above formula (5) include 2-methylene-1,3-propanediol diacetate, 2-methylene-1,3-propanediol dipropionate, 2-methylene-1,3-propanediol dibutyrate, 2-methylene-1,3-propanediol, 2-methylene-1,3-butanediol, and the like. Of these, 2-methylene-1,3-propanediol diacetate is preferred in light of ease in manufacture. In the case in which the monomer is 2-methylene-1,3-propanediol diacetate, R¹, R², R³, and R⁴ in the formula (5) each represent a hydrogen atom, and Y and Z represents an acetyl group.

The monomer unit (c) may be a monomer unit represented by the following formula (c2), or a monomer unit represented by the following formula (c3): 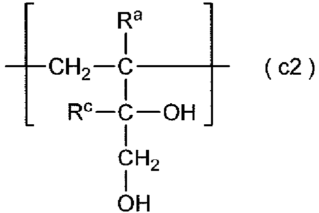 wherein, in the formula (c2), R^{a} and R^{c} are as defined for R^{a} and R^{c} in the formula (c). 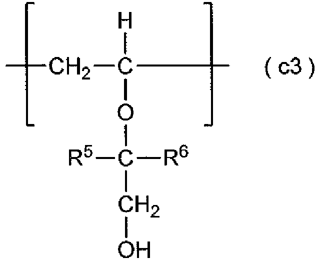 wherein, in the formula (c3), R⁵ and R⁶ each independently represent a hydrogen atom, an alkyl group having 1 to 10 carbon atoms, a cycloalkyl group having 3 to 10 carbon atoms, or a hydroxy group. A part or all of hydrogen atoms comprised in the alkyl group having 1 to 10 carbon atoms and the cycloalkyl group having 3 to 10 carbon atoms may be substituted with a hydroxy group, an alkoxy group, a carboxy group, or a halogen atom.

A percentage content of the monomer unit (c) in the modified EVOH satisfies the following inequality (3): $0.01 \leq c \leq 20$ (3) wherein, in the inequality (3), c represents a percentage content of (mol%) of the monomer unit (c) with respect to total monomer units of the modified EVOH.

When c in the inequality (3) (i.e., the percentage content of the monomer unit (c)) is equal to or more than the lower limit described above, the interlayer adhesiveness, flex resistance, and the like can be improved. On the other hand, when c in the inequality (3) is equal to or less than the upper limit described above, the gas barrier properties, and the like can be improved. The lower limit of c is preferably 0.1, more preferably 0.5, and still more preferably 1.0. The upper limit of c is preferably 12, more preferably 8, and still more preferably 5.

The modified EVOH typically comprises the monomer unit (c) in which at least one of Y and Z represents a hydrogen atom. Of all the monomer units (c) comprised in the modified EVOH, the proportion accounted for by the monomer unit (c) in which at least one of Y and Z represents a hydrogen atom is preferably 50 mol% or more, more preferably 70 mol% or more, and still more preferably 90 mol% or more. Due to the modified EVOH comprising a sufficient amount of the monomer unit (c) in which at least one of Y and Z represents a hydrogen atom, the adhesiveness between the A layer and the B layer can be more enhanced.

The lower limit of the degree of saponification (DS) in the modified EVOH, as defined by the following equality (4) is 90 mol%, preferably 95 mol%, more preferably 99 mol%, and still more preferably 99.5 mol%. Due to the degree of saponification of the modified EVOH being equal to or more than the lower limit described above, the gas barrier properties, interlayer adhesiveness, melt formability, and the like can be improved. The upper limit of the degree of saponification may be 100 mol%. $DS = \left[\left(\begin{matrix}total number of moles of X , Y , and Z which represent a hydrogen \\ atom\end{matrix}\right)/\left(total number of moles of X, Y, and Z\right)\right] \times 100$ (4)

Here, in a case in which R^{b}, R^{c}, R^{d}, and R^{e} in the modified EVOH does not contain a hydroxy group, a "total number of moles of X, Y, and Z in which a hydrogen atom is not contained" indicates the number of moles of hydroxy groups contained in the monomer unit (b) and monomer unit (c) which are comprised in the modified EVOH. Moreover, in this case, the "total number of moles of X, Y, and Z" indicates the total number of moles of hydroxy groups and ester groups contained n the monomer unit (b) and monomer unit (c) comprised in the modified EVOH.

The degree of saponification of the modified EVOH can be determined by a method described in EXAMPLES.

The lower limit of a total percentage content of the monomer unit (a), monomer unit (b), and monomer unit (c), with respect to total monomer units of the modified EVOH, is preferably 95 mol%, more preferably 98 mol%, still more preferably 99 mol%, and particularly preferably 99.9 mol%. In the case in which the modified EVOH is substantially constituted from only the monomer unit (a), monomer unit (b), and monomer unit (c), the effects of the invention may be more sufficiently exhibited. The upper limit of the total percentage content of may be 100 mol%.

The modified EVOH may comprise other monomer unit(s) aside from the monomer unit (a), monomer unit (b), and monomer unit (c) within the range not leading to impairment of the effects of the invention. Examples of monomers that give the other monomer unit(s) include: α-olefins such as propylene, n-butene, isobutylene, and 1-hexene; acrylic acid and salts thereof; unsaturated monomers having acrylic acid ester groups; methacrylic acid and salts thereof; unsaturated monomers having methacrylate ester groups; acrylamide, N-methylacrylamide, N-ethylacrylamide, N,N-dimethylacrylamide, diacetoneacrylamide, acrylamidepropane sulfonic acid and salts thereof, acrylamide propyl dimethylamine and salts thereof (e.g., quaternary salts); methacrylamide, N-methylmethacrylamide, N-ethylmethacrylamide, methacrylamidepropane sulfonic acid and salts thereof, methacrylamide propyl dimethylamine and salts thereof (e.g., quaternary salts); vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; vinyl cyanides such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane, and allyl chloride; unsaturated dicarboxylic acids such as maleic acid, itaconic acid, and fumaric acid, and salts or esters thereof; vinylsilane compounds such as vinyltrimethoxysilane; isopropenyl acetate; and the like.

The melting point of the modified EVOH is preferably 140 °C or more and 200 °C or less, and more preferably 150 °C or more and 180 °C or less. Due to the melting point of the modified EVOH falling within the above range, exhibiting favorable melt formability, and the like are enabled. The melting point of the modified EVOH is measured in accordance with JIS K7121 (2012).

The lower limit of the content of the modified EVOH in the A layer is, for example, preferably 80% by mass, more preferably 90% by mass, and still more preferably 95% by mass, or may be 98% by mass, 99% by mass, or 99.5% by mass. Due to the content of the modified EVOH in the A layer being equal to or more than the lower limit described above, the effects of the invention may be particularly sufficiently achieved. The upper limit of the content may be 99.999% by mass, or may be 99.99% by mass, 99.9% by mass, or 99% by mass.

The method for producing the modified EVOH is not particularly limited, and the modified EVOH can be produced by a method described in, for example, paragraph Nos. [0068] to [0128], and the like of Japanese Unexamined Patent Application, Publication No. 2021-104579. Alternatively, the modified EVOH used may be one described in Japanese Unexamined Patent Application, Publication No. 2021-104579. The modified EVOH used may be a commercially available product purchased.

An exemplary method for producing the modified EVOH comprising the monomer unit (c) represented by the above formula (c1) comprises: copolymerizing the monomer represented by the above formula (5), ethylene, and a vinyl ester; and saponifying a resultant modified ethylene-vinyl ester copolymer. The copolymerization and saponification can be conducted by well-known procedures.

As a polymerization mode, batch polymerization, semi-batch polymerization, continuous polymerization, semi-continuous polymerization, or the like can be adopted. Alternatively, as the polymerization procedure, a well-known procedure such as a bulk polymerization procedure, a solution polymerization procedure, a suspension polymerization procedure, or an emulsion polymerization can be adopted. A bulk polymerization procedure or a solution polymerization procedure in which polymerization is allowed to proceed without a solvent or in a solvent such as an alcohol is typically adopted.

A solvent used in the solution polymerization procedure is not particularly limited and is exemplified by an alcohol, and preferred examples thereof include lower alcohols such as methanol, ethanol, and propanol. The amount of the solvent in a polymerization reaction liquid may be selected taking into consideration the degree of polymerization of the modified EVOH intended, chain transfer of the solvent, and the like. A mass ratio (solvent/ total monomer) of a solvent to total monomers comprised in the reaction liquid falls, for example, within the range of 0.01 to 10, and preferably within the range of 0.05 to 3.

A polymerization initiator (hereinafter, may be also referred to as "initiator") for use in carrying out the copolymerize is selected from well-known initiators, for example, an azo-based initiator, a peroxide-based initiator, a redox type initiator, and the like. Examples of the azo-based initiator include 2,2'-azobisisobutyronitrile, 2,2'-azobis(2,4-dimethylvaleronitrile), 2,2'-azobis(4-methoxy-2,4-dimethylvaleronitrile), and the like. Examples of the peroxide-based initiator include percarbonate-based compounds such as diisopropyl peroxydicarbonate, di-2-ethylhexyl peroxydicarbonate, and diethoxyethyl peroxydicarbonate; perester compounds such as t-butylperoxyneodecanate, α-cumyl peroxyneodecanate, and acetyl peroxide; acetyl cyclohexyl sulfonyl peroxide; 2,4,4-trimethylpentyl-2-peroxyphenoxyacetate; and the like. Potassium persufate, ammonium persulfate, hydrogen peroxide, or the like may be combined with the initiator described above. The redox type initiator is a polymerization initiator in which, for example, the peroxide-based initiator described above is combined with a reducing agent such as sodium bisulfite, sodium bicarbonate, tartaric acid, L-ascorbic acid, or Rongalit. The amount of the initiator used is adjusted in accordance with the polymerization rate. The amount of the initiator used is, with respect to the vinyl ester, preferably 0.01 to 0.2 mol%, and more preferably 0.02 to 0.15 mol%. The polymerization temperature is not particularly limited, and is adequately from around room temperature to about 150 °C, and preferably 40 °C or more and equal to or less than the boiling point of the solvent to be used.

The copolymerization may be carried out in the presence of a chain transfer agent within the range not to impair the effects of the invention. Examples of the chain transfer agent include: aldehydes such as acetaldehyde and propionaldehyde; ketones such as acetone and methyl ethyl ketone; mercaptans such as 2-hydroxyethanethiol; phosphinic acid salts such as sodium phosphinate monohydrate; and the like, and an aldehyde or a ketone is preferred. The amount of the chain transfer agent added to the polymerization reaction liquid may be predetermined according to a chain transfer coefficient of the chain transfer agent, and the degree of polymerization of the modified ethylene-vinyl ester copolymer intended, and it is in general, preferably 0.1 to 10 parts by mass, with respect to 100 parts by mass of the vinyl ester monomer.

The modified EVOH can be obtained by saponifying the resulting modified ethylene-vinyl ester copolymer. In this process, vinyl ester units in the copolymer are converted into vinyl alcohol units. In addition, ester bonds in the monomer unit derived from the monomer represented by the formula (5) are concurrently hydrolyzed, thereby being converted into 1,3-diol structure. Thus, a single saponification reaction enables ester groups of different types to be concurrently hydrolyzed.

As a procedure for saponifying the modified ethylene-vinyl ester copolymer, a well-known procedure can be adopted. The saponification reaction is performed typically in an, alcohol or a hydrous alcohol solution. The alcohol suitably used in this case is a lower alcohol such as methanol or ethanol, and methanol is preferred. The alcohol or the hydrous alcohol for use in the saponification reaction may comprise, for example, other solvent(s) such as acetone, methyl acetate, ethyl acetate, and benzene as long as the content is 40% or less by mass with respect to the mass of the alcohol or the hydrous alcohol. A catalyst for use in the saponification may be, for example, an alkali metal hydroxide such as potassium hydroxide or sodium hydroxide, an alkali catalyst such as sodium methylate, or an acid catalyst such as a mineral acid. The temperature for performing the saponification is not limited, and preferably falls within the range of 20 to 120 °C. In the case in which a gelatinous product is precipitated as the saponification proceed, the product may be ground and thereafter washed and dried, whereby the modified EVOH can be obtained.

Furthermore, an exemplary method for producing the modified EVOH comprising the monomer unit (c) represented by the above formula (c2) comprises: copolymerizing, for example, 3,4-diol-1-butene, 3,4-diacyloxy-1-butene, 3-acyloxy-4-ol-1-butene, 4-acyloxy-3-ol-1-butene, 3,4-diacyloxy-2-methyl-1-butene, or the like, together with a vinyl ester and ethylene; and saponifying a resultant copolymer. Furthermore, a method comprising: polymerizing 4,5-diol-1-pentene, 4,5-diacyloxy-1-pentene, 4,5-diol-3-methyl-1-pentene, 4,5-diol-3-methyl-1-pentene, 5,6-diol-1-hexene, 5,6-diacyloxy-1-hexene, or the like, together with a vinyl ester and ethylene; and saponifying a resultant copolymer, and the like may be exemplified. Also in this case, a copolymerization procedure and a saponification procedure, which are conventionally well known can be appropriately employed, and conditions for the modified EVOH comprising the monomer unit (c) represented by the above formula (c1) described above can be also adopted.

Moreover, an exemplary method for producing the modified EVOH comprising the monomer unit (c) represented by the above formula (c3) comprises allowing EVOH to react with a monovalent epoxy compound. The procedure of allowing for the reaction is not particularly limited, and a production procedure comprising allowing EVOH to react with a monovalent epoxy compound in a solution, a production procedure comprising allowing EVOH to react with a monovalent epoxy compound in an extruder, and the like may be exemplified. It is preferred that the monovalent epoxy compound is an epoxy compound having only one epoxy group within its molecule. In addition, the number of carbon atoms of the monovalent epoxy compound is preferably 2 to 8. Specific examples of the monovalent epoxy compound include 1,2-epoxybutane, epoxypropane, epoxyethane, glycidol, and the like.

### Inorganic Particles

The A layer comprises inorganic particles. The inorganic particles as referred to herein mean particles containing an inorganic compound as a main component. As referred to herein, the main component means a component, the content of which on mass basis is 50% or more by mass, preferably a component, the content of which on mass basis is 70% or more by mass, and more preferably a component, the content of which on mass basis is 90% or more by mass, or may be a component, the content of which on mass basis is 99% or more by mass. The inorganic particles may be particles substantially consisting of only an inorganic compound.

The multilayer structure according to one embodiment of the present invention can achieve the effects of having sufficient gas barrier properties and having superior interlayer adhesiveness, due to the A layer comprising the inorganic particle together with the modified EVOH.

The average particle diameter of the inorganic particles is preferably more than 0.3 µm and 20 µm or less, more preferably 0.7 µm or more and 12 µm or less, still more preferably 1.0 µm or more and 8 µm or less, and even more preferably 1.5 µm or more and 4 µm or less. Due to the average particle diameter of the inorganic particles falling within the above range, more enhancing the gas barrier properties and interlayer adhesiveness of the multilayer structure, and the like are enabled. The average particle diameter of the inorganic particles as referred to herein is defined as an average value of particle diameters of secondary particles observed by a field emission scanning electron microscope. Furthermore, each particle diameter of the secondary particle corresponds to its longitudinal diameter. The particle diameter of the inorganic particles is measured, specifically, according to the method described in EXAMPLES.

The inorganic compound which may constitute the inorganic particles preferably contains a metal element (including a metalloid element), and it is preferred that at least one metal element selected from the group consisting of silicon, aluminum, magnesium, zirconium, cerium, tungsten, and molybdenum is contained. Of these, because of ready availability, containing at least one element selected from the group consisting of silicon, aluminum, and magnesium is more preferred, and containing a silicon element is still more preferred.

The inorganic compound which may constitute the inorganic particles is exemplified by the above-exemplified oxides, nitrides, hydroxides, oxynitrides, and the like of the element, and is preferably an oxide or a hydroxide, more preferably an oxide, still more preferably a metal oxide, even more preferably silicon dioxide, magnesium oxide, or zirconium dioxide, and particularly preferably silicon dioxide. In the case in which the inorganic particles contain an oxide, reactivity between the isocyanate group (-NCO) of the thermoplastic polyurethane and the inorganic particles is more increased, whereby the adhesiveness between the A layer and the B layer may further improve. In light of the reactivity with the isocyanate group, the inorganic particles may have a hydroxy group present on the surface.

The inorganic particles may include one type, or two or more types of particles. Also, one inorganic particle may be formed from one type, or two or more types of inorganic compounds.

The lower limit of the content of the inorganic particles with respect to the modified EVOH in the A layer is 5 ppm, preferably 20 ppm, more preferably 50 ppm, still more preferably 100 ppm, even more preferably 300 ppm, and yet more preferably 500 ppm, or may be 1,000 ppm, 1,500 ppm, or 2,000 ppm. Due to the content of the inorganic particles being equal to or more than the lower limit described above, the adhesiveness between the A layer and the B layer may improve. The upper limit of the content of the inorganic particles with respect to the modified EVOH in the A layer is 5,000 ppm, and preferably or may be 4,000 ppm, 3,500 ppm, 3,000 ppm, 2,500 ppm, or 2,000 ppm. Due to the content of the inorganic particles being equal to or less than the upper limit described above, the multilayer structure can exhibit sufficient gas barrier properties, and the like. It is to be noted that "ppm" means the content on mass basis.

The lower limit of the total content of the modified EVOH and inorganic particles in the A layer is, for example, preferably 80% by mass, more preferably 90% by mass, and still more preferably 95% by mass, or may be 98% by mass, 99% by mass, 99.5 mass, or 99.9% by mass. Due to the total content of the modified EVOH and the inorganic particles in the A layer being equal to or more than the lower limit described above, the effects of the invention can be particularly sufficiently achieved. The upper limit of the total content may be 100% by mass, or may be 99.99% by mass, 99.9% by mass, or 99% by mass.

The A layer may comprise other resin(s) aside from the modified EVOH described above. The other resin is exemplified by modified or unmodified EVOHs other than the modified EVOH described above, as well as thermoplastic resins such as polyolefins, polyamides, polyesters, polystyrenes, polyvinyl chlorides, acrylic resins, polyurethanes, polycarbonates, and polyvinyl acetates.

The A layer may further comprise, within the range not to impair the effects of the invention, other additive(s) aside from the modified EVOH, the inorganic particles, and the other resin(s). The other additive is exemplified by a metal salt, a heat stabilizer, an antioxidant, a UV absorbent, a plasticizer, an antistatic agent, a lubricant, a colorant, a filler, a stabilizer, a surfactant, a crosslinking agent, a fiber-reinforcing agent, and the like.

The A layer preferably comprises an alkali metal salt as the metal salt. When the A layer comprises the alkali metal salt, the interlayer adhesiveness may be more favorable. The cation species of the alkali metal salt is not particularly limited, and a sodium salt or a potassium salt is preferred. Also, the anion species of the alkali metal salt is not particularly limited, and addition as a carboxylate, a carbonate, a bicarbonate, a phosphate, a hydrogen phosphates, a borate, or a hydroxide is permitted. The content of the alkali metal salt in the A layer, in terms of alkali metal element equivalent, is preferably 10 to 500 ppm, and more preferably 50 to 300 ppm.

It is also preferred that the A layer comprises a boron compound as a heat stabilizer. When the A layer is formed from a resin composition comprising a boron compound, torque fluctuation during heat melting can be inhibited. The boron compound is not particularly limited, and is exemplified by boric acids, boric acid ester, boric acid salts, boron hydrides, and the like. Specifically, orthoboric acid, metaboric acid, tetraboric acid, and the like may be exemplified. Examples of the boric acid esters include triethyl borate, trimethyl borate, and the like, and examples of the boric acid salts include alkali metal salts and alkaline earth metal salts of the aforementioned various types of boric acids, borax, and the like. Of these compounds, orthoboric acid (hereinafter, may be merely described as boric acid) is preferred. The content of the boron compound in the A layer is, in terms of boron element equivalent, preferably 20 to 2,000 ppm, and more preferably 50 to 1,000 ppm.

It is also preferred that the A layer comprises, as a heat stabilizer, a phosphoric acid compound. When the A layer is formed from a resin composition comprising a phosphoric acid compound, coloring during melt molding can be inhibited. The phosphoric acid compound is not particularly limited, and various types of acids such as phosphoric acid and phosphorous acid, as well as salts thereof, etc., can be employed. The phosphoric acid salt may be contained in any form of a monobasic phosphate salt, a dibasic phosphate salt, and a tribasic phosphate salt, and the monobasic phosphate salt is preferred. The cation species of the same is not particularly limited, and an alkali metal salt is preferred. Of these, sodium dihydrogen phosphate or potassium dihydrogen phosphate is preferred. The content of the phosphoric acid compound in the A layer, in terms of phosphate radical equivalent, preferably 5 to 200 ppm, and more preferably 10 to 160 ppm.

The lower limit of the average thickness of a single A layer is preferably 0.1 µm, more preferably 1 µm, and still more preferably 3 µm, or may be 5 µm, 10 µm, 20 µm, or 30 µm. On the other hand, the upper limit is preferably 200 µm, and more preferably 100 µm, or may be 60 µm, 30 µm, 10 µm, or 5 µm. When the average thickness of a single A layer is equal to or more than the lower limit described above, the gas barrier properties and durability thereof, and the like may improve. When the average thickness of a single A layer is equal to or less than the upper limit described above, flexibility and the like may be enhanced, and as a result, flex resistance and the like may improve. The average thickness as referred to herein means an average value of thicknesses measured at arbitrary five points.

### B layer

The B layer comprises TPU. Due to having the B layer comprising TPU, the multilayer structure according to one embodiment of the present invention is capable of exhibiting favorable stretchability, flex resistance, formability, and the like.

TPU is typically a linear multi-block copolymer or the like comprising: (1) a polyurethane moiety obtained by a reaction of a short-chain glycol (low-molecular-weight polyol) and isocyanate as a hard segments; and (2) a polyurethane moiety obtained by a reaction of a long-chain glycol (high-molecular-weight polyol) and isocyanate as a soft segment. Here, "polyurethane" is a general term for compounds having a urethane bond (-NHCOO-) obtained by a polyaddition reaction between an isocyanate group (-NCO) and a hydroxy group (-OH). Polyurethane as referred to herein is a generic name of a compound which has an urethane bond (-NHCOO-) and is obtained by a polyaddition reaction (urethanization reaction) between an isocyanate group (-NCO) and a hydroxy group (-OH). One type, or two or more types of TPU may be used.

TPU is typically constituted from a high-molecular weight polyol, an organic polyisocyanate, a chain extender, or the like.

The high-molecular weight polyol is a substance having a plurality of hydroxy groups, and may be obtained by polycondensation, addition polymerization (e.g., ring-opening polymerization), polyaddition, or the like. The high-molecular weight polyol is exemplified by a polyester polyol, a polyether polyol, a polycarbonate polyol, condensates thereof (e.g., a polyester-ether-polyol), and the like. Of these, a polyester polyol or a polycarbonate polyol is preferred, and a polyester polyol is more preferred. The high-molecular weight polyol may be used either alone, or two or more types thereof may be used in combination.

The polyester polyol may be produced, for example, according to a conventional method, by allowing an ester-formable derivative such as a dicarboxylic acid, an ester thereof, or an anhydride thereof to be condensed with a low-molecular weight polyol by way of a direct esterification reaction or a transesterification reaction, or by subjecting a lactone to ring-opening polymerization.

Examples of the polyether polyol include polyethylene glycol, polypropylene glycol, polytetramethylene glycol, poly(methyltetramethylene) glycol, and the like. Of these, polytetramethylene glycol is preferred.

The polycarbonate polyol is exemplified by substances obtained through condensation polymerization by allowing an aliphatic diol having 2 to 12 carbon atoms such as 1,4-butanediol, 1,5-pentanediol, 1,6-hexanediol, 1,8-octanediol, or 1,10-decanediol, or a mixture of these to react with diphenyl carbonate, phosgene, or the like.

The lower limit of the number-average molecular weight of the high-molecular weight polyol is preferably 500, more preferably 600, and still more preferably 700. On the other hand, the upper limit of the number-average molecular weight of the high-molecular weight polyol is preferably 8,000, more preferably 5,000, and still more preferably 3,000. The number-average molecular weight of the high-molecular weight polyol is determined by a measurement in accordance with JIS K 1577 and calculated based on the hydroxy group value.

The organic polyisocyanate is not particularly limited, and a well-known organic diisocyanate commonly employed in the production of TPU may be used. Examples of the organic polyisocyanate include: aromatic diisocyanates such as 4,4'-diphenylmethanediisocyanate, tolylenediisocyanate, phenylenediisocyanate, xylylenediisocyanate, 1,5-naphthylenediisocyanate, 3,3'-dichloro-4,4'-diphenylmethanediisocyanate, and toluylenediisocyanate; aliphatic diisocyanates (inclusive of alicyclic diisocyanates) such as hexamethylenediisocyanate, isophoronediisocyanate, 4,4'-dicyclohexylmethanediisocyanate, and hydrogenated xylylenediisocyanate; and the like. Among these, in light of capability of improving the strength and flexural resistance of the multilayer structure to be obtained, the aromatic diisocyanate is preferred, and 4,4'-diphenylmethanediisocyanate more is preferred. The organic diisocyanate may be used either alone, or in a combination of two or more types thereof.

As the chain extender, any chain extender commonly employed in the production of TPU can be used, and, for example, a low-molecular weight compound having two or more active hydrogen atoms that can react with an isocyanate group in the molecule and having a molecular weight of 300 or less is suitably used. Examples of the chain extender include ethylene glycol, propylene glycol, 1,4-butanediol, 1,6-hexanediol, 1,4-bis(β-hydroxyethoxy)benzene, 1,4-cyclohexanediol, and the like. Among these, in light of the stretchability, formability, and the like of the multilayer structure to be obtained, an aliphatic diol having 2 to 10 carbon atoms is preferred, and 1,4-butanediol is particularly preferred. The chain extender may be used either alone, or as a mixture of two or more types thereof.

TPU can be produced by using the high-molecular weight polyol, the organic polyisocyanate, and the chain extender described above, with employing a well-known urethanization reaction technique. TPU can be produced using either a prepolymer method or a one-shot method. In particular, melt polymerization conducted substantially in the absence of a solvent is preferred, and continuous melt polymerization conducted through the use of a multi-screw extruder is particularly preferred.

The B layer may be constituted from only the TPU, or may contain component(s) aside from the TPU. The lower limit of the content of TPU in the B layer is, for example, preferably 80% by mass, more preferably 90% by mass, and still more preferably 95% by mass, or may be 98% by mass, 99% by mass, 99.5 mass, or 99.9% by mass. When the content of TPU in the B layer is equal to or more than the lower limit described above, the effects of the invention may be particularly sufficiently achieved. The upper limit of the content may be 100% by mass, or may be 99% by mass or 95% by mass.

Other component(s) which may be comprised in the B layer aside from TPU is/are exemplified by other resin(s) aside from TPU, a heat stabilizer, an ultraviolet ray absorbing agent, an antioxidant, a colorant, an antistatic agent, a lubricant, a filler, and the like.

The lower limit of the average thickness of a single B layer is preferably 0.1 µm, more preferably 1 µm, and still more preferably 3 µm, or may be 5 µm, 10 µm, 20 µm, or 30 µm. On the other hand, this upper limit is preferably 200 µm, and more preferably 100 µm, or may be 60 µm, 30 µm, 10 µm, or 5 µm. Due to the average thickness of a single B layer being equal to or more than the lower limit described above, durability and the like may be improved. Due to the average thickness of the a single B layer being equal to or less than the upper limit described above, contemplating film thinning of the multilayer structure, and the like are enabled.

### Other Layer

The multilayer structure according to one embodiment of the present invention may be configured from only the A layer and B layer, or may be provided with other layer(s) aside from the A layer and B layer. The other layer is exemplified by resin layer(s) aside from the A layer and B layer (a thermoplastic resin layer other than the A layer and B layer, an adhesive resin layer, a rubber layer, etc.). The other layer may be a layer other than resin layers, such as a paper layer and a metal layer. In one embodiment of the present invention, the multilayer structure may be configured from only the resin layer. The resin layer as referred to herein means a layer comprising a resin as a main component. The multilayer structure configured from the resin layer is exemplified by: a multilayer structure configured from only the A layer and B layer; and a multilayer structure configured from the A layer, the B layer and the other resin layer(s).

### Layer Configuration

The layer configuration of the multilayer configuration according to one embodiment of the present invention comprises at least single A layer and at least single B layer, and is not particularly limited as long as at least one pair of A layer and B layer are in direct lamination. In the multilayer structure, strong adhesiveness is provided between the A layer and the B layer being directly laminated.

The lower limit of the number of the A layer(s) in the multilayer structure according to one embodiment of the present invention may be one, or may be two or three. The upper limit of the number of the A layer(s) may be 100, or may be twenty, ten, five, three, or two. The lower limit of the number of the B layer(s) may be one, or may be two or three. The upper limit of the number of the B layer(s) may be 200, or may be 50, ten, five, three, or two. The lower limit of the number of all the layers in the multilayer structure is two, or may be three or four. The upper limit of the number of all the layers may be 300, or may be 100, twenty, ten, or five.

The layer configuration of the multilayer structure according to one embodiment of the present invention is exemplified by layer configurations as in the following. It is to be noted that in the following layer configuration, "A" represents the A layer, "B" represents the B layer, "X" represents the other layer aside from the A layer and B layer.
A/ B
B/ A/ B
X/ A/ B
B/ A/ B/ A/ B
X/ A/ B/ A/ B
X/ A/ B/ A/ X
B/ A/ B/ A/ B/ A/ B
B/ B/ A/ B/ A/ B/ A/ B/ B
B/ A/B/ A/ B/ A/ B/ A/ B/ A/B

The multilayer structure according to one embodiment of the present invention may be an alternate laminate of the A layer and B layer. The multilayer structure may have a symmetrical structure, with the cross section thereof having an axis of symmetry that corresponds to the A layer or B layer. In the case of the symmetrical structure, it is advantageous coextrusion enables e.g., the multilayer structure to be particularly efficiently formed, and the like.

In the multilayer structure according to one embodiment of the present invention, at least one outermost layer is preferably the B layer. It is to be noted that the outermost layer as referred to herein means a layer with one surface not in contact with any other layer, and the multilayer structure has two outermost layers. In the case in which at least one of the outermost layers of the multilayer structure is the B layer, the surface on which the layer B as the outermost layer is located enables favorable adhesion to a rubber material (e.g., diene-based rubber) or the like. In the multilayer structure, two outermost layers may be both the B layers. In this case, favorable adhesion to the rubber material or the like is enabled on the two faces.

The multilayer structure according to one embodiment of the present invention may be a multilayer film, or may be a formed product such as a container, formed into a predetermined shape. The multilayer structure may be either an unstretched film or a stretched film. The average thickness of the multilayer structure is preferably 1 µm or more and 2,000 µm or less, more preferably 10 µm or more and 1,000 µm or less, and still more preferably 50 µm or more and 500 µm or less.

### Intended Usage, Etc.

The multilayer structure according to one embodiment of the present invention has sufficient gas barrier properties and has superior interlayer adhesiveness. In addition, the multilayer structure is also favorable in flex resistance, stretchability, and the like, and in the case in which the outermost layer is the B layer, the surface of this outermost layer can favorably adhere to a rubber material or the like by a crosslinking reaction. Therefore, the multilayer structure can be used as a food packaging material, a container packaging material for medical treatment, other container packaging materials, a sheet material for industrial use, etc., and as a sheet material for architectural use, a sheet material for agriculture, a geomembrane, a radon barrier film, other sheet materials, cushion materials having gas-sealed structures such as air soles, various types of pipes, and the like. In particular, since the multilayer structure having the B layer as the outermost layer is favorable in adhesiveness to the rubber material or the like as described above, it is suitably used as a gas barrier film to be laminated onto film-like rubber products such as accumulator inner bags, inflatable balls, inner liners, and air springs.

### Method for Production

The method for producing a multilayer structure according to one embodiment of the present invention is not particularly limited as long as the A layer and the B layer can be favorably laminated and adhere to each other, and a well-known method such as coextrusion, pasting, coating, bonding, or attaching may be employed..

The multilayer structure according to one embodiment of the present invention may be produced by a method preferably comprising a step of coextruding the resin material for forming the A layer and the resin material for forming the B layer. The resin material for forming the A layer comprises the modified EVOH and the inorganic particles. A specific formulation and a suitable formulation of the resin material for forming the A layer are similar to a specific formulation and a suitable formulation of the A layer. The resin material for forming the B layer comprises TPU. A specific formulation and a suitable formulation of the resin material for forming the B layer are similar to a specific formulation and a suitable formulation of the B layer.

According to a multilayer coextrusion process, the multilayer structure is formed by a process comprising: heating to melt the resin material for forming the A layer and the resin material for forming the B layer; feeding the resin materials with different extruders and/or pumps to extrusion dies through their respective flow paths; extruding the polymers into multiple layers, from the extrusion dies; and thereafter laminating by adhesion. As the extrusion die, for example, a multimanifold die, a field block, a static mixer, or the like may be used.

It is to be noted that the melt viscosity ratio is preferably as specified below in relation to the viscosity of each of the resin materials for forming the A layer and the B layer. The lower limit of the ratio (η_{B}/η_{A}) of the viscosity of the resin material for forming the B layer (η_{B}) to the viscosity of the resin material for forming the A layer (η_{A}) at a temperature of 210 °C and at a share rate of 1,000/sec is preferably 0.3, and more preferably 0.5. On the other hand, the upper limit of this melt viscosity ratio (η_{B}/η_{A}) is preferably 2, and more preferably 1.5. When the melt viscosity ratio (η_{B}/η_{A}) falls with the above range, a favorable external appearance may be provided in forming the multilayer structure by multilayer coextrusion, and favorable adhesion between the A layer and the B layer may be provided, whereby the durability and the like of the multilayer structure can be improved.

The method for producing the multilayer structure preferably comprises a step of irradiating with an electron beam, the structure (multilayer structure) obtained after the coextrusion. Due to the irradiation with an electron beam, a crosslinking reaction occurs between layers, and thus the interlayer adhesive force of the multilayer structure obtained can be enhanced. Various types of electron beam accelerators such as a Cockcroft-Walton accelerator, a Van de Graaff accelerator, a resonance transformer accelerator, an insulated core transformer accelerator, a Dynamitron accelerator, and a high frequency accelerator may be used as an electron beam source.

### EXAMPLES

The present invention is specifically explained in detail by way of Examples below, but the present invention is not in any way limited by these Examples.

### Example 1

### (1) Synthesis of Modified Ethylene-Vinyl Acetate Copolymer

Into a 50 L pressurized reaction vessel equipped with a jacket, a stirrer, a nitrogen feed port, an ethylene feed port, and an initiator addition port, 21 kg of vinyl acetate (hereinafter, may be also referred to as "VAc"), 3.8 kg of methanol (hereinafter, may be also referred to as "MeOH"), and 0.6 kg of 2-methylene-1,3-propanediol diacetate (a monomer in which R¹, R², R³, and R⁴ each represent a hydrogen atom, and Y and Z represents an acetyl group, in the formula (5); hereinafter, may be also referred to as "MPDAc") were charged, and after the temperature was elevated to 60 °C, and an interior of the reaction vessel was replaced with nitrogen by bubbling nitrogen for 30 min. Thereafter, ethylene was introduced such that a reaction vessel pressure (ethylene pressure) became 4.7 MPa. After the temperature in the reaction vessel was adjusted to 60 °C, polymerization was started by adding, as an initiator, 12.6 g of 2,2'-azobis(2,4-dimethylvaleronitrile) ("V-65", manufactured by Wako Pure Chemical Industries, Ltd.) in a methanol solution. During the polymerization, the ethylene pressure was maintained at 4.7 MPa, and the polymerization temperature was maintained at 60 °C. 6.0 hrs later when a rate of polymerization of VAc became, the polymerization was stopped by cooling. The reaction vessel was opened to allow for elimination of ethylene, and thereafter the nitrogen gas was bubbled to complete the elimination of ethylene. Subsequently, unreacted Vac was eliminated under a reduced pressure, and thereafter MeOH was added to a modified ethylene-vinyl acetate copolymer into which the monomer unit derive from MPDAc (hereinafter, may be also referred to as "modified EVAc"), whereby a 20% by mass MeOH solution was prepared.

### (2) Saponification of Modified EVAc

Into a 10 L reaction vessel equipped with a jacket, a stirrer, a nitrogen feed port, a reflux condenser, and a solution addition port, 4,715 kg of a 20% by mass solution of the modified EVAc obtained in (1) in MeOH was charged. While nitrogen gas was blown into this solution, the temperature of the solution was elevated to 60 °C, and a solution of sodium hydroxide having a concentration of 2 N in MeOH was added to the solution at a rate of 14.7 mL/min for 2 hrs. After completion of the addition of the solution of sodium hydroxide in MeOH, a saponification reaction was allowed to proceed, with stirring of the mixture for 2 hrs while an internal temperature of the system was maintained at 60 °C. Subsequently, 254 g of acetic acid was added to the mixture, whereby the saponification reaction was stopped. Thereafter, with heating and stirring at 80 °C, 3 L of ion exchanged water was added thereto, and MeOH was flowed outside the reaction vessel to permit precipitation of the modified EVOH. Thus precipitated modified EVOH was collected by decantation, and was ground by a mixer. The modified EVOH powder thus obtained was charged into a 1 g/L aqueous acetic acid solution (bath ratio 20: a ratio of 20 L of the aqueous solution with respect to 1 kg of the powder) and washed with stirring for 2 hrs. The modified EVOH powder was deliquored and further, charged into a 1 g/L aqueous acetic acid solution (bath ratio 20) and washed with stirring for 2 hrs. Purification was conducted by repeating three times, an operation of: charging the modified EVOH powder into ion exchanged water (bath ratio 20); washing with stirring for 2 hrs; and carrying out deliquoring. Next, the modified EVOH powder was subjected to immersion with stirring in 10 L of an aqueous solution containing 0.5 g/L acetic acid and 0.1 g/L sodium acetate for 4 hrs, and then deliquored. Drying of the powder at 60 °C for 16 hrs gave 503 g of crude dry matter of the modified EVOH.

### (3) Production of Modified EVOH Hydrous Pellet

Into a 3 L stirring tank equipped with a jacket, a stirrer, and a reflux condenser, 758 g of the crude dry matter of the modified EVOH obtained by repeating the operation of (2) twice, 398 g of water, and 739 g of MeOH were charged, and dissolve by elevating the temperature to 85 °C. This solution was extruded through a glass tube having a diameter of 4 mm into a mixed liquid of water/MeOH = 90/10 cooled to 5 °C to precipitate in a strand form, and the strands were cut into pellet form using a strand cutter to give water-containing pellets of the modified EVOH. The moisture content of the water-containing pellets of the modified EVOH thus obtained was 55% by mass, as measured with a halogen moisture analyzer "HR73", manufactured by Mettler-Toledo International Inc.

### (4) Production of Modified EVOH Composition Pellets

1,577 g of the water-containing pellets of the modified EVOH obtained in the above (3) were charged into a 1 g/L aqueous acetic acid solution (bath ratio: 20) and washed with stirring for 2 hrs. The modified EVOH was deliquored and further charged into a 1 g/L aqueous acetic acid solution (bath ratio: 20), and washed with stirring for 2 hrs. After the deliquoring, the aqueous acetic acid solution was renewed and a similar operation was conducted. Washing with an aqueous acetic acid solution and deliquoring was followed by purification performed through repeating three times, an operation of: charging the modified EVOH into ion exchanged water (bath ratio 20); washing with stirring for 2 hrs; and carrying out deliquoring. Accordingly, water-containing pellets of the modified EVOH were obtained in which catalyst residues in the saponification reaction were sufficiently reduced. The water-containing pellets were charged into an aqueous solution (bath ratio: 20) containing sodium acetate at a concentration of 0.525 g/L, acetic acid at a concentration of 0.8 g/L, and phosphoric acid at a concentration of 0.007 g/L, and immersion was allowed for 4 hrs with stirring periodically. By deliquoring and drying at 80 °C for 3 hrs and at 105 °C for 16 hrs, modified EVOH composition pellets were obtained which contained acetic acid, a sodium salt, and a phosphoric acid compound.

### (5) Content of Each Structural Unit in Modified EVAc

The percentage content of the monomer unit (a) (a: percentage content of the ethylene unit), the percentage content of the monomer unit (b) (b: percentage content of the monomer unit derived from vinyl acetate), and the percentage content of the monomer unit (c) (c: percentage content of the monomer unit derived from MPDAc) in the modified EVAc were calculated according to the following procedure through ¹H-NMR measurement of the modified EVAc before saponification.

First, a small amount of a MeOH solution of the modified EVAc obtained in (1) was sampled and the modified EVAc was precipitated in ion-exchanged water. The precipitate was collected and dried under vacuum at 60 °C, whereby dried matter of the modified EVAc was obtained. Next, the dried matter of the modified EVAc thus obtained was dissolved in dimethyl sulfoxide (DMSO)-d6 containing tetramethylsilane as an internal standard, and measured at 80 °C using ¹H-NMR ("GX-500", manufactured by JEOL, Ltd.) at 500 MHz.

Each peak in the ¹H-NMR spectrum of the modified EVAc obtained is assigned as follows.
- 0.6 to 1.0 ppm: methylene protons (4H) of ethylene units in the terminal moiety
- 1.0 to 1.85 ppm: methylene protons (4H) of ethylene units in the intermediate moiety, methylene protons (2H) of main-chain monomer units derived from MPDAc, methylene protons (2H) of monomer units derived from vinyl acetate
- 1.85 to 2.1 ppm: methyl protons (6H) of monomer units derived from MPDAc, and methyl protons (3H) of monomer units derived from vinyl acetate
- 3.7 to 4.1 ppm: methylene protons (4H) of side-chain monomer units derived from MPDAc
- 4.4 to 5.3 ppm: methine protons (1H) of monomer units derived from vinyl acetate

According to the assignments described above, provided that: the integrated value at 0.6 to 1.0 ppm is taken as x; the integrated value at 1.0 to 1.85 ppm is taken as y; the integrated value at 3.7 to 4.1 ppm is taken as z; and the integrated value at 4.4 to 5.3 ppm is taken as w, the percentage content of the ethylene unit (a: mol%), the percentage content of the monomer unit derived from vinyl acetate (b: mol%), and the percentage content of the monomer unit derived from MPDAc (c: mol%) are calculated by the following formulae, respectively. $a = \left\{\left(2x+2y-z-4w\right)/\left(2x+2y+z+4w\right)\right\} \times 100$ $b = \left\{8w/\left(2x+2y+z+4w\right)\right\} \times 100$ $c = \left\{2z/\left(2x+2y+z+4w\right)\right\} \times 100$

As a result of the calculation according to the process described above, the percentage content of the ethylene unit (a) was 38.0 mol%, the percentage content of the monomer unit derived from vinyl acetate (b) was 60.4 mol%, and the percentage content of the monomer unit derived from MPDAc (c) was 1.6 mol%. Values of a, b, and c in the modified EVAc are identical, respectively, to values of a, b, and c in the modified EVOH after the saponification treatment.

### (6) Degree of Saponification of Modified EVOH

The modified EVOH after the saponification was similarly subjected to the ¹H-NMR measurement. The crude dry matter of the modified EVOH obtained in the above (2) was dissolved in dimethyl sulfoxide (DMSO)-d6 containing tetramethylsilane as an internal standard and tetrafluoroacetic acid (TFA) as an additive, and measured at 80 °C using ¹H-NMR ("GX-500", manufactured by JEOL, Ltd.) at 500 MHz. In the ¹H-NMR spectrum of the modified EVOH obtained, the peak intensity at 1.85 to 2.1 ppm significantly decreased, and it was verified that, in addition to the ester group contained in the monomer unit derived from vinyl acetate, the ester group contained in the monomer unit derived from MPDAc is also saponified to give a hydroxy group. The degree of saponification was calculated from the peak intensity ratio of methyl protons of the monomer units derived from vinyl acetate and methyl protons of the monomer units derived from MPDAc (1.85 to 2.1 ppm) to methine protons of the vinyl alcohol units (3.15 to 4.15 ppm). The degree of saponification (DS) of the modified EVOH was 99.9 mol% or more.

### (7) Melting Point of Modified EVOH

The modified EVOH composition pellets obtained in the above (4) was subjected to the measurement in accordance with JIS K7121 (2012), which comprises: after elevating the temperature from 30 °C to 215 °C at a rate of 10 °C/min, followed by quenching at 100 °C/min until -35 °C; and elevating the temperature again from -35 °C to 195 °C at a rate of 10 °C/min (differential scanning calorimeter (DSC) "RDC220/SSC5200H", manufactured by Seiko Electronics Co., Ltd.). For calibration of the temperature, indium and lead were used. The melting peak temperature (Tpm) was determined from the chart of the second run, in accordance with the above-described JIS, and this Tpm was defined as the melting point of the modified EVOH. The melting point was 160 °C.

### (8) Production of Resin Composition Pellets Comprising Inorganic Particles

To the modified EVOH composition pellets obtained in the above (4) were added inorganic particles (silicon dioxide particles having the average primary particle diameter of 30 nm and the average secondary particle diameter of 2 µm) in an amount leading to the content with respect to the modified EVOH of 1,500 ppm, and mixed together using a tumbler (manufactured by NISSUI KAKO) for 5 min such that the modified EVOH and the inorganic particles were well admixed. Next, the resultant mixture was charged into the material feeding zone of the twin-screw extruder at 10 kg/hour, and kneaded at a resin temperature of 250 °C in the extruder and extruded, whereby the resin composition pellets comprising the modified EVOH and inorganic particles were obtained. The secondary particle diameter of the inorganic particles in the resin composition pellets obtained was determined as in the following. The resin composition pellets onto which platinum palladium was vapor deposited were observed using a field emission scanning electron microscope (FE-SEM) "SU8010", manufactured by HITACHI, under a condition involving: the accelerating voltage of 1.0 kV and the focal length of 32 mm. The particle diameters of all the secondary particles (aggregates) which could be identified in one field was determined. It is to be noted that as the particle diameter of the secondary particles (aggregates), the largest longitudinal diameter of the secondary particles (aggregates) was employed. The particle diameter (secondary particle diameter) of each silicon dioxide particle measured fell within the range of 2 to 20 µm.

### (9) Fabrication of Film

The resin composition pellets obtained in the above (8) were used for single-layer film forming carried out under the following conditions with a 20 mm extruder manufactured by Toyo Seiki Seisaku-sho, Ltd. (D (mm) = 20, L/D = 20, compression ratio = 2.0, screw: full flight), whereby a monolayer film was obtained.
cylinder temperature: 175 °C at the feeding zone; 190 °C at the compression zone, and 190 °C at the metering zone
die temperature: 190 °C
screw rotation speed: 40 to 100 rpm
amount of discharge: 0.4 to 1.5 kg/hour
temperature of drawing rolls: 80 °C
speed of drawing rolls: 0.8 to 3.2 m/min
film thickness: 20 µm

It is to be noted that in other Comparative Examples, temperature conditions of the extruder in fabricating the monolayer film were set depending on the melting point of the modified EVOH or EVOH as described below.

Cylinder temperatures:
feeding zone: 175 °C
compression zone: the melting point of the modified EVOH or EVOH + 30 to 45 °C
metering zone: the melting point of the modified EVOH or EVOH + 30 to 45 °C
die temperature: the melting point of the modified EVOH or EVOH + 30 to 45 °C

### (10) Measurement of Oxygen Transmission Rate

The monolayer film obtained in the above (9) and having an average thickness of 20 µm was subjected to seasoning under the condition involving 20 °C and 85% RH for 3 days, and thereafter to measurement of the oxygen transmission rate under the same condition ("OX-TORAN MODEL 2/21", manufactured by Mocon, Inc.). As a result, the oxygen transmission rate (OTR) was 1.6 cc·20 µm/(m²·day·atm). In this measurement, the gas barrier properties were assessed as being sufficient in the case in which the oxygen transmission rate (OTR) is 10 cc·20 µm/ (m²·day·atm) or less.

### (11) Fabrication of Multilayer Structure (I)

By using the resin composition pellets obtained in the above (8), a monolayer film (average thickness: 100 µm) was fabricated by a hot pressing technique under a condition involving 210 °C and 200 kN. Similarly, a monolayer film of a polyurethane resin (Elastollan E685, manufactured by BASF) was fabricated. Thus obtained gas barrier layer and polyurethane layer were laminated, and by using a heat sealer "HSE 3" manufactured by RDM Test Equipment Ltd, a multilayer structure (I) (multilayer film) having the gas barrier layer and polyurethane layer was fabricated at a temperature of 210 °C and a pressure of 0.12 kPa, for a time period of 10 sec. With respect to the multilayer structure (I) thus obtained, the interlayer adhesive force was evaluated by the method in the following (12). Each average value from measurements of three times is shown in Table 1.

### (12) Measurement of Interlayer Adhesive Force of Multilayer Structure (I)

The multilayer structure (I) obtained in the above (11) was stored in an atmosphere of 20 to 23 °C, and a 15 mm strip-shaped piece was employed as a measurement sample. Using an autograph "model AGS-H" manufactured by Shimadzu Corporation in an atmosphere of 20 to 23 °C, T-peel strength of this measurement sample was measured at a tensile rate of 100 mm/min. The obtained value (unit: N) was defined as the interlayer adhesive force between the gas barrier layer and the polyurethane layer. In this measurement, the interlayer adhesiveness was assessed as being superior, in the case in which the interlayer adhesive force is 20 N or more.

### (13) Fabrication of Multilayer Structure (II)

Using the resin composition pellets obtained in the above (8), a multilayer structure (multilayer film) of [layer structure: polyethylene layer/ polyurethane layer/ modified EVOH composition layer (gas barrier layer)/ polyurethane layer/ polyethylene layer, average thickness (µm): 170/ 60/ 60/ 60/ 170] was fabricated, and polyethylene layers on two surfaces were peeled. "Novatec LD LJ400" manufactured by Japan Polyethylene Corporation was used as the polyethylene, and "Estane 2103-90AE", manufactured by Lubrizol Japan Limited was used as polyurethane. The apparatus and conditions for coextrusion employed in this process were as described below. With respect to the multilayer structure (II) after peeling the polyethylene layer off, the average thicknesses of two outermost layers, the polyurethane layers were each 60 µm, whereas the average thickness of the gas barrier layer was 60 µm. Thus obtained multilayer structure (II) was evaluated by the method in the following (14). The results are shown in Table 2.

Coextrusion molding conditions
- extrusion temperatures of each resin: feeding zone/ compression zone/ metering zone/die = 170 °C/ 170 °C/ the melting point of the modified EVOH or EVOH + 30 to 45 °C/the melting point of the modified EVOH or EVOH + 30 to 45 °C Extruder:
- polyethylene 32φ extruder model GT-32-A (manufactured by Research Laboratory of Plastics Technology Co., Ltd.)
- polyurethane 25φ extruder model P25-18-AC (manufactured by Osaka Seiki Kousaku Co., Ltd.)
- resin composition Lab-scale 20φ Co-extrusion Machine (manufactured by Toyo Seiki Seisaku-sho, Ltd.)

T die: width of 300 mm, for five layers of three types (manufactured by Research Laboratory of Plastics Technology Co., Ltd.)
Temperature of cooling rolls: 80 °C
Drawing speed: 1.2 m/min

### (14) Measurement of Interlayer Adhesive Force of Multilayer Structure (II)

The interlayer adhesive force of the multilayer structure (II) obtained in the above (13) was measured as described below. The multilayer structure (II) obtained was stored in an atmosphere of 23 °C and 50% RH, and then the day after production, a 15 mm strip-shaped slice was made and used as a test material for measurement. Using the test material for measurement, a T type peel strength was measured by using "AGS-H model," an autograph available from Shimadzu Corporation, in an atmosphere of 23 °C and 50% RH, at a strain rate of 250 mm/min. The resultant value (units: g/15 mm) was defined as the interlayer adhesive force between the gas barrier layer and the polyurethane layer. In this measurement, in the case in which the interlayer adhesive force was 450 g/ 15 mm or more, the interlayer adhesiveness was assessed as being superior.

### Example 2

Resin composition pellets comprising the inorganic particles, and the like, were produced in a similar manner to Example 1, except that the amount of the inorganic particles was 700 ppm in the above (8) of Example 1, and were evaluated by the methods in the above (13) and (14). The results are shown in Table 2.

### Example 3

Resin composition pellets comprising the inorganic particles, and the like, were produced in a similar manner to Example 1, except that the amount of the inorganic particles was 3,000 ppm in the above (8) of Example 1, and were evaluated by the methods in the above (13) and (14). The results are shown in Table 2.

### Example 4

The modified EVAc was obtained by performing polymerization by a similar method to that of the method in the above (1) of Example 1, except that the amount of MeOH was 2.1 kg, the amount of MPDAc was 1.1 kg, the ethylene pressure was 4.3 MPa, and the amount of the initiator was 16.8 g. 4.5 hrs later when the rate of polymerization of Vac became 32%, the polymerization was stopped by cooling. Resin composition pellets comprising the inorganic particles, and the like were produced in a similar manner to Example 1 except for the above points, were and measured and evaluated by the methods in the above (13) and (14). The results are shown in Table 2.

### Example 5

Resin composition pellets comprising the inorganic particles, and the like, were produced in a similar manner to Example 1, except that the inorganic particles were changed to Al₂O₃ in the above (8) of Example 1, and were evaluated by the methods in the above (13) and (14). The results are shown in Table 2.

### Example 6

Resin composition pellets comprising the inorganic particles, and the like, were produced in a similar manner to Example 1, except that the inorganic particles were changed to MgO and that the content was changed to 700 ppm in the above (8) of Example 1, and were evaluated by the methods in the above (13) and (14). The results are shown in Table 2.

### Example 7

Resin composition pellets comprising the inorganic particles, and the like, were produced in a similar manner to Example 1, except that the inorganic particles were changed to ZrO₂ and that the content was changed to 700 ppm in the above (8) of Example 1, and were evaluated by the methods in the above (13) and (14). The results are shown in Table 2.

### Comparative Example 1

The unmodified EVAc was obtained by performing polymerization by a similar method to that of the method in the above (1) of Example 1, except that the amount of MeOH was 8.0 kg, the ethylene pressure was 3.6 MPa, the amount of the initiator was 4.2 g, and that MPDAc was not charged. 4.5 hrs later when the rate of polymerization of Vac became 44%, the polymerization was stopped by cooling. In the above (8) of Example 1, the inorganic particles were not added. The unmodified EVOH composition pellets were produced in a similar manner to Example 1, except for these points.

On the unmodified EVOH resin composition pellets thus obtained, a twin-screw extruder "TEM-35BS" (37 mmφ, L/D = 52.5) available from Toshiba Machine Co., Ltd. was used to allow epoxybutane to react under the addition of a catalyst. Unreacted epoxybutane was eliminated through a vent. Next, a 8.2% by mass aqueous ethylenediaminetetraacetic acid trisodium salt hydrate solution was added as a catalyst quencher, and pelletization was conducted. Thereafter, drying was carried out, whereby the modified EVOH composition pellets having the ethylene unit content of 32.0 mol% were obtained. Furthermore, epoxybutane-modification percentage was 5.8 mol%, from the measurement by ¹H-NMR (internal standard substance: tetramethylsilane; solvent: d6-DMSO). The modified EVOH composition pellets (resin composition pellets) thus obtained were measured and evaluated by the methods in the above (7) and (9) to (12). The results are shown in Table 1.

### Comparative Example 2

The unmodified EVAc was obtained by performing polymerization by a similar method to that of the method in the above (1) of Example 1, except that the amount of MeOH was 9.5 kg, the amount of the initiator was 3.2 g, the ethylene pressure was 2.9 MPa, and that MPDAc was not added. 5.5 hrs later when the rate of polymerization of Vac became 46%, the polymerization was stopped by cooling. In the above (8) of Example 1, the inorganic particles were not added. The unmodified EVOH composition pellets (resin composition pellets) were produced in a similar manner to Example 1, except for these points, and measured and evaluated by the methods in the above (5) to (7) and (9) to (12). The results are shown in Table 1.

### Comparative Example 3

The unmodified EVAc was obtained by performing polymerization by a similar method to that of the method in the above (1) of Example 1, except that the amount of MeOH was 2.3 kg, the amount of the initiator was 4.2 g, the ethylene pressure was 5.6 MPa, and that MPDAc was not added. 6 hrs later when the rate of polymerization of Vac became 44%, the polymerization was stopped by cooling. In the above (8) of Example 1, the inorganic particles were not added. The unmodified EVOH composition pellets (resin composition pellets) were produced in a similar manner to Example 1, except for these points, and measured and evaluated by the methods in the above (5) to (7), (13), and (14). The results are shown in Table 2.

### Comparative Example 4

The modified EVOH composition pellets (resin composition pellets) were produced in a similar manner to Example 1, except the inorganic particles were not added in the above (8) of Example 1, and were measured and evaluated by the methods in the above (5) to (7), (13), and (14). The results are shown in Table 2.

### Comparative Example 5

The unmodified EVOH composition pellet (resin composition pellets) were produced in a similar manner to Example 1, except that the amount of MeOH was 2.3 kg, the amount of the initiator was 4.2 g, the ethylene pressure was 5.6 MPa, and that MPDAc was not added in the above (1) of Example 1, and were measured and evaluated by the methods in the above (5) to (7), (13), and (14). The results are shown in Table 2.

### Comparative Example 6

The unmodified EVOH composition pellet (resin composition pellets) were produced in a similar manner to Example 1, except that the amount of MeOH was 6.3 kg, the amount of the initiator was 4.2 g, the ethylene pressure was 4.4 MPa, and that MPDAc was not added in the above (1) of Example 1, and were measured and evaluated by the methods in the above (5) to (7), (13), and (14). The results are shown in Table 2.

**Table 1**

| | Modified EVOH or EVOH | | | | | Inorganic particles | Evaluations | |
|---|---|---|---|---|---|---|---|---|
| | a | b | c | DS | Melting point | Content | OTR^{*1)} | Interlayer adhesive force |
| | mol% | mol% | mol% | mol% | °C | ppm | *2) | N |
| Example 1 | 38.0 | 60.4 | 1.6 | ≥ 99.9 | 160 | 1,500 | 1.6 | 30 |
| Comparative Example 1 | 32.0 | 62.2 | 0.0^{*3)} | ≥ 99.9 | 183 | 0 | 1.3 | 9 |
| Comparative Example 2 | 27.0 | 73.0 | 0.0 | ≥ 99.9 | 191 | 0 | 1.2 | 2 |

| | | | | | | | | |
|---|---|---|---|---|---|---|---|---|
| *1) condition: 20 °C, 85% RH *2) unit: cc·20 µm/(m²·day·atm) *3) epoxybutane-modified EVOH (degree of modification: 5.8 mol%) | | | | | | | | |

**Table 2**

| | Modified EVOH or EVOH | | | | | Inorganic particles | | Evaluations |
|---|---|---|---|---|---|---|---|---|
| | a | b | c | DS | Melting point | Type | Content | Interlayer adhesive force |
| | mol% | mol% | mol% | mol% | °C | - | ppm | g/15 mm |
| Example 1 | 38.0 | 60.4 | 1.6 | ≥ 99.9 | 160 | SiO₂ | 1,500 | 480 |
| Example 2 | 38.0 | 60.4 | 1.6 | ≥ 99.9 | 160 | SiO₂ | 700 | 480 |
| Example 3 | 38.0 | 60.4 | 1.6 | ≥ 99.9 | 160 | SiO₂ | 3,000 | 520 |
| Example 4 | 32.0 | 64.4 | 3.6 | ≥ 99.9 | 155 | SiO₂ | 1,500 | 490 |
| Example 5 | 38.0 | 60.4 | 1.6 | ≥ 99.9 | 160 | Al₂O₃ | 1,500 | 480 |
| Example 6 | 38.0 | 60.4 | 1.6 | ≥ 99.9 | 160 | MgO | 700 | 480 |
| Example 7 | 38.0 | 60.4 | 1.6 | ≥ 99.9 | 160 | ZrO₂ | 700 | 480 |
| Comparative Example 3 | 44.0 | 56.0 | 0.0 | ≥ 99.9 | 165 | - | 0 | 380 |
| Comparative Example 4 | 38.0 | 60.4 | 1.6 | ≥ 99.9 | 160 | - | 0 | 440 |
| Comparative Example 5 | 44.0 | 56.0 | 0.0 | ≥ 99.9 | 165 | SiO₂ | 1,500 | 390 |
| Comparative Example 6 | 38.0 | 62.0 | 0.0 | ≥ 99.9 | 172 | SiO₂ | 1,500 | 380 |

As shown in Table 1 and Table 2, each of the multilayer structures of Examples has sufficient gas barrier properties and has superior interlayer adhesiveness.

### [INDUSTRIAL APPLICABILITY]

The multilayer structure of the present invention can be suitably used for container packaging materials, sheet materials, cushion materials, pipes, and the like.

## Claims

1. A multilayer structure comprising:
a gas barrier layer (A) comprising a modified ethylene-vinyl alcohol copolymer and inorganic particles; and
a polyurethane layer (B) comprising a thermoplastic polyurethane, wherein
the modified ethylene-vinyl alcohol copolymer comprises a monomer unit (a), a monomer unit (b), and a monomer unit (c) which are represented by the following formula (a), formula (b), and formula (c), respectively,
percentage contents of the monomer unit (a), the monomer unit (b), and the monomer unit (c) in the modified ethylene-vinyl alcohol copolymer satisfy the following inequalities (1) to (3), respectively,
as defined by the following equality (4), a degree of saponification (DS) in the modified ethylene-vinyl alcohol copolymer is 90 mol% or more,
a content of the inorganic particles in the gas barrier layer (A), with respect to the modified ethylene-vinyl alcohol copolymer, is 5 ppm or more and 5,000 ppm or less, and
at least a pair of the gas barrier layer (A) and the polyurethane layer (B) is directly laminated, 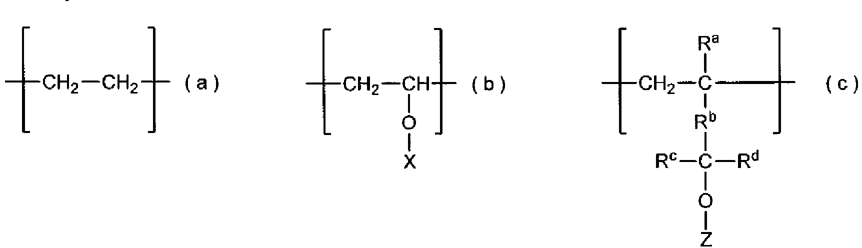
wherein, in the formulae (a) to (c): R^{a} represents a hydrogen atom, a methyl group, or a group represented by R^{e}-O-Y; R^{d} and R^{e} each independently represent a single bond, an alkylene group having 1 to 9 carbon atoms, or an alkyleneoxy group having 1 to 9 carbon atoms, wherein a part or all of hydrogen atoms comprised in the alkylene group and the alkyleneoxy group may be substituted with a hydroxy group, an alkoxy group, or a halogen atom; R^{c} and R^{d} each independently represent a hydrogen atom or an alkyl group having 1 to 10 carbon atoms, wherein a part or all of hydrogen atoms comprised in the alkyl group may be substituted with a hydroxy group, an alkoxy group, or a halogen atom; and X, Y, and Z each independently represent a hydrogen atom, a formyl group, or an alkanoyl group having 2 to 10 carbon atoms, $18 \leq a \leq 55$ (1) $\left[100-\left(a+c\right)\right] \times 0.9 \leq b \leq \left[100-\left(a+c\right)\right]$ (2) $0.01 \leq c \leq 20$ (3)
wherein, in the inequalities (1) to (3), a, b, and c represent percentage contents (mol%) of the monomer unit (a), the monomer unit (b), and the monomer unit (c), respectively, with respect to total monomer units of the modified ethylene-vinyl alcohol copolymer, $DS = \left[\left(\begin{matrix}total number of moles of X , Y , and Z which represent a hydrogen \\ atom\end{matrix}\right)/\left(total number of moles of X, Y, and Z\right)\right] \times 100$ (4)

2. The multilayer structure according to claim 1, wherein the monomer unit (c) is represented by the following formula (c1): 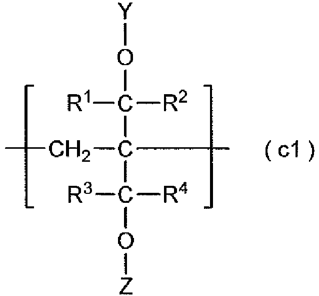 wherein, in the formula (c1): R¹, R², R³, and R⁴ each independently represent a hydrogen atom or an alkyl group having 1 to 10 carbon atoms, wherein a part or all of hydrogen atoms comprised in the alkyl group may be substituted with a hydroxy group, an alkoxy group, or a halogen atom; and Y and Z are as defined for Y and Z in the formula (c).

3. The multilayer structure according to claim 2, wherein R¹, R², R³, and R⁴ each represent a hydrogen atom.

4. The multilayer structure according to any one of claims 1 to 3, wherein X, Y and, Z each independently represent a hydrogen atom or an acetyl group.

5. The multilayer structure according to any one of claims 1 to 3, wherein an outermost layer is the polyurethane layer (B).
